# EUROPEAN PATENT SPECIFICATION

(11) **EP 4 205 428 B1**
(45) Date of publication and mention of the grant of the patent: **30.07.2025**
(21) Application number: 21766683.3
(22) Date of filing: 30.08.2021
(51) Int. Cl.: H04W 12/06, G06F 21/32

(54) **A SYSTEM AND A METHOD FOR MANAGING USER IDENTITY DATA**
SYSTEM UND VERFAHREN ZUR VERWALTUNG VON BENUTZERIDENTITÄTSDATEN
SYSTÈME ET PROCÉDÉ DE GESTION DE DONNÉES D'IDENTITÉ D'UTILISATEUR

(30) Priority: 31.08.2020 EP 20315394
(43) Date of publication of application: 05.07.2023
(73) Proprietor: Amadeus S.A.S., 06410 Biot (FR)
(72) Inventor: ABRAHAM, Eldho, Thrissur Kerala 680699 (IN)
(74) Representative: Samson & Partner Patentanwälte mbB
(86) International application number: PCT/EP2021/073918
(87) International publication number: WO 2022/043564

(56) References cited:
- US-A1- 2013 218 721
- US-A1- 2014 222 522

## Description

### Field

The present invention relates to a method and a system for managing identity data (ID data) of registered users. More specifically, the present invention relates to a system and a method for monitoring and managing the distribution of user IDs to different ID processing touchpoints.

### Background

Electronic authentication is widely adopted by systems in different applications to authenticate the identity of a user. During the electronic authentication, registered identity data of a user is compared with information provided at the electronic authentication touchpoints. For example, biometric recognition systems utilise the biometric data obtained by digitising measurements of a physical or behavioural characteristic of a person to verify the identity of the person. Characteristics used by modern biometric recognition systems include fingerprint, hand shape, retina pattern, voiceprint, handwriting style or face. In general, biometric identification systems rely on the comparison between a set of reference biometric characteristics of the user captured during an enrolment stage and corresponding biometric characteristics of the user extracted from a scan of the user. For example, the captured biometric characteristics may be obtained from an image or a scan of the user captured by means of an imaging or scanner equipment at a biometric authentication touchpoint, e.g. airport passport control, a biometric point of recognition (POP) system, and the like. In general, biometric offers the possibility of processing a large number of people with relative ease. Biometric authentication has been deployed in a number of industries. For example, airports use facial recognition to identify individuals as they move towards their destination.

In many cases, the information processed or received at an electronic ID processing touchpoint may be transferred to another electronic system or reused at a later time without the knowledge of the corresponding user. As such, there are growing concerns on how the identity information of an individual is used and processed by an electronic ID processing touchpoint. Currently, there is a lack of transparency, and as such, governments and individuals have become sceptical on the use of biometric authentication. More specifically, individuals are concerned that their user ID may be used in a malicious manner without knowing or having the possibility to react.

US 2014/222522 A1 relates to techniques for monitoring and verifying compliance in a distributed work environment. Violations of rules are detected only at the touchpoints via compliance checks. US 2013/218721 A1 concerns a transaction visual capturing system that transforms different parameters of a mobile device into real-time behavior-sensitive product purchase related information, shopping purchase notification, and electronic receipts. The consumer's identity may be determined by biometric recognition. Therefore, there is a need for a solution that would enable a user to have transparency of how their identity data is collected, and when and why is collected, processed, analysed and shared with third parties.

### Summary

The invention is defined by the appended claims.

An aim of the present invention is to provide a method and a system that overcomes the disadvantages of the prior art. More specifically, the present invention provides a method and a system for monitoring and controlling the distribution of user IDs to different ID processing touchpoints.

According to a first aspect of the present invention, a distributed system for managing identity, ID, data of registered users is provided. The ID management system comprising
a client application running on an electronic device associated with each registered user, each client application comprising a graphic user interface, GUI for interacting with the corresponding registered user;
a network of ID processing touchpoints, each configured to process identity data for the authentication of users, each ID processing touchpoints being configured to issue status notifications associated with the processing and/or use of the ID data by the ID processing touchpoint;
an ID server configured to receive and distribute the status notifications issued by the ID touchpoints to the corresponding client applications;
wherein each client application is configured, in response to receiving a status notifications from the ID server and/or an ID processing touchpoint, to issue user alerts on the graphic user interface to notify registered users on the status of their corresponding ID data at the different ID processing touchpoints.

The ID management system of the present disclosure enables users to receive notification in relation to the status of their identity, ID, data at an ID processing touchpoint. The identity data may comprise a range of information identifying the user such as name, address, biometric ID, email, and the like. As such, the user acquires transparency over the use and processing of the corresponding ID data at different locations. The use of a central ID server enables the distribution of the user ID to a network of connected ID processing touchpoints. The touchpoints may be provided with a monitoring application configured to monitor the use and processing of ID data, and accordingly, generate status notifications. The status notifications may be generated in response to the use and/or processing of a user ID at an ID processing touchpoint. For example, a status notification may be issued at an ID processing touchpoint requesting the sharing of a user ID in response to a registered user being presented for authentication. Once the ID processing touchpoint is provided with the ID data of a registered user, notifications may be issued each time the user ID is used and/or processed, e.g. transfer of the user ID to another connected entity, deleting the user ID, storing the user ID and the like. The status notification may be collected by the ID server and accordingly distributed to the corresponding client applications. Furthermore, the ID processing touchpoints may issue notifications directly to the client application of a corresponding user. The monitoring application may be configured to communicate the status notifications as soon as they are generated or in batches. The client application is configured to receive the status notification issued by the ID server and/or the ID processing touchpoints and accordingly generate user alerts, which are displayed on a graphic user interface (GUI) running on the electronic device of the corresponding registered user. The user alerts may be in the form of a message, a sound, a vibration, and the like. As such, the user is promptly notified about the status of his/her ID data at a specific location and accordingly is in a position to initiate actions.

According to an embodiment, the status notifications may include, but not limited to: user ID arrived, user ID Scheduled, the user ID is Active/Inactive, user ID currently in use, user ID Breached, user ID Deleted.

According to an embodiment, the client application is configured to display on the GUI a set of user-selectable options for initiating one or more actions in response to a notification received from the ID server and/or an ID processing touchpoint.

According to an embodiment, the client application is configured, upon receiving a user response through the GUI, to issue counter-notification to the ID server and/or ID processing touchpoints.

According to an embodiment, the selectable options comprise at least one of providing consent for the sharing of the corresponding ID data to ID processing touchpoints and issuing a breach notification indicating an unauthorised ID transaction at an ID processing touchpoint.

The client application provides to the user, in response to receiving status notifications, a number of selectable options on the GUI. For example, the client application, in response to receiving a request from the ID server and/or an ID processing touchpoint to share the identity data, may provide a set of options to the user, which may include acceptance or decline of the request. Other options may be included as needed. Furthermore, the selectable options may include an option for reporting a breach of the identity data. The ID management system enables users to maintain control of how their corresponding ID is distributed, used, and processed, by different ID processing systems. Furthermore, the ID managing system presented herein allows users to monitor and manage the user, processing and sharing of their user ID data at different ID processing systems. In this way, the present ID management system offers a secure way for the distribution of user IDs between different ID processing touchpoints and their monitoring thereof.

According to an embodiment, the client application is configured, in response to a user selecting to provide consent for the sharing of the corresponding ID data, to communicate a consent notification comprising the requested ID data of the user to the ID server, the ID server being configured to distribute the ID data at a selected set of ID processing touchpoints.

According to an embodiment, the route is generated based on information obtained from a travel itinerary of the registered user.

The ID server may act as a central point for processing requests for the distribution of user IDs at the different ID processing touchpoints. The ID server may be configured to request, via the issuance of a notification, the consent of registered users to distribute their corresponding user IDs to different ID processing touchpoints. The request for the user ID may be initiated from the ID server and/or the ID processing touchpoints. The client application may generate a consent notification, upon receiving the consent of the user, to the biometric server, which may comprise the user ID. The user ID of the user may be stored in the electronic device of the user. The ID server may store the user ID and distributed it to the ID processing touchpoints, in accordance with the response received from the client application. The ID server may communicate to the client application information regarding the ID processing touchpoints to which the user ID would be distributed. The user, via the GUI, may initiate an action in response to the request received from the ID server, which may include one of accepting the request, refuse the request, report the request, and the like. The route displayed on the GUI may be generated based on a travel itinerary of a user. For example, the client application and/or the ID server may obtain the travel itinerary from a connected travel application. As such a pre-approved route may be constructed for the distribution of the user ID in advance of the user journey. For example, the ID server may schedule for the user ID to be transferred to an ID processing touchpoint on the route according to the itinerary schedule. The user may pre-approve the distribution of the user ID along the route via the client application. The user via the route displayed on the GUI may monitor the transfer and use of the corresponding ID.

According to an embodiment, upon receiving a selection for issuing a breach notification, the client application is configured, to issue a corresponding breach notification, which is communicated to a secure server, where it is stored in a registry, the security server being part of the ID management system.

According to an embodiment, the security server is configured upon receiving the breach notification to collect information from the one or more ID processing touchpoints associated with the unauthorised transaction and accordingly communicate a report to the client application of the registered user, the report comprising information associated with the breach.

According to an embodiment, the security server, upon receiving the breach notification is configured to initiate a set of breach control actions for assessing and managing the identified ID breach, the breach control actions comprising at least one of investigating the cause of the breach, notifying other ID processing touchpoints of the breach, and deleting the breached data from the ID management system and/or other ID processing touchpoints.

The ID management system of the present invention offers enhanced security in the distribution, use and processing of user IDs with the provision of a secure server. The security server may be configured to receive notifications from the client application and/or ID server with regards to the breach of a user ID at one or more ID processing touchpoints. The security server, upon receiving the breach notification, retrieves from the one or more ID processing touchpoint information associated with the breached transactions and accordingly generate a report, which is sent to the user. At the same time, a registry of the breach data is maintained for 'n' days or till the breach is identified. The registry may maintain the list of breached data or reference of the transaction. The security server may compare future ID transaction at the ID processing touchpoint with the data stored in the registry for verification. The security server, depending on the severity of the breach, may take a number of actions. For example, the deletion of known and authorised traces of the identity/data is initiated via an action system. The action system, depending on the type of registered ID processing touchpoints, may initiate at least one of:
Searching: Finding the breach causer through a global/local surveillance system, e.g. in case of biometric authentication breach at the airport,
Expecting: If one entity reports breach, other entities expect a breach through the information stored in the registry of the breach control system.
Delete: In case of rectification is not possible, deletion of data for controlling the damage.

According to an embodiment, the client application is configured to display on the GUI a graphical representation of the status of the corresponding ID data at different ID processing touchpoints.

According to an embodiment, the graphic representation is in the form of a route displaying the transfer of the ID data between different ID processing touchpoints.

According to an embodiment, based on the status notification, the client application is configured to display on the route the current status of the ID data at the different ID processing touchpoints.

The ID management system of the present invention is configured to provide to the user a visual representation of how the corresponding ID is used at different touchpoints. For example, the client application may generate a map showing the status of the user ID at different ID processing touchpoints over a period of time. The ID processing touchpoints may be represented with an icon, which may be unique depending on the nature and type of the ID processing touchpoint. Accordingly, the status of the user ID at the different touchpoints may be displayed, thereby allowing the user to more efficiently assess the status of their ID data over a period of time. Furthermore, the client application may selectively display information on the GUI. For example, the GUI, in response to the user selecting an icon of an ID processing touchpoint, may open a new window displaying information on the use and processing of the user ID at the specified ID processing touchpoint over a period of time. By selectively displaying information on the GUI may reduce the battery and processing requirements, as well as enhance the comprehension of the status of the user ID at ID processing touchpoint. The selection of the ID touchpoint may be performed in a number of ways such as tapping an icon on a touch-sensitive display of the electronic device, selecting The GUI may further provide a number of options to the user, which when selected initiate a predetermined action, e.g. delete, authorise, remove, and the like.

According to an embodiment, the ID processing touchpoints are connected to the ID server on the basis of membership.

According to an embodiment, the ID server is configured to include or exclude ID processing touchpoints from membership based on metrics indicative their ID security performance.

To enhance the security of the ID management system, the ID processing touchpoints are connected to the ID server on the basis of membership. The ID server may comprise a membership module for registering ID processing touchpoints to the system. For example, the membership module may be configured to allow only ID processing touchpoints with specific security characteristics to be registered. Once the ID processing touchpoint is registered, it is added to the network of connected ID processing touchpoints to which the user IDs may be transferred. The ID server may be configured to monitor the security performance of the ID processing touchpoint. For example, the ID server may extract security risk metrics from information obtained from the security server. For example, an ID processing touchpoints that have been the subject of a breach, e.g. due to spoofing, may be considered as a risk to the security. The ID server, based on the security risk metrics, may invoke the membership of a registered biometric processing touchpoint.

According to a second aspect, a method for managing identity, IDs, data of registered users is provided. The method comprising:
receiving at an ID server-status notifications issued by a network of ID processing touchpoints associated with the processing and/or use of IDs data of registered users;
distributing the status notifications to corresponding client applications, each running on an electronic device associated with a registered user and comprising a graphic user interface, GUI for interacting with the corresponding registered user;
wherein each client application is configured to notify registered users on the status of their corresponding user ID by
issuing user alerts on the graphic user interface in response to receiving status notifications from the ID server and/or an ID processing touchpoint.

### Brief description of the drawings

The following drawings are provided as an example to further explain and describe various aspects of the invention:
Figure 1 shows an example of an ID management system according to embodiments of the present invention.
Figures 2 to 4 show examples of the communication between the different modules of the ID management system according to embodiments of the present invention.
Figure 8 shows an exemplified communication between a vendor application and the main server according to the embodiments of the present invention

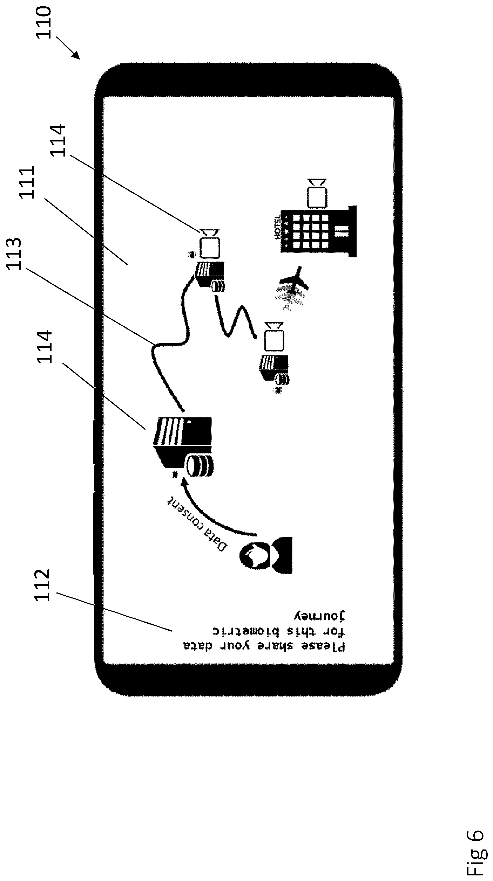

Figures 6 to 8 show examples of notification presented by the client applications on the Graphic User Interface running on the electronic device of the user according to embodiments of the present invention.

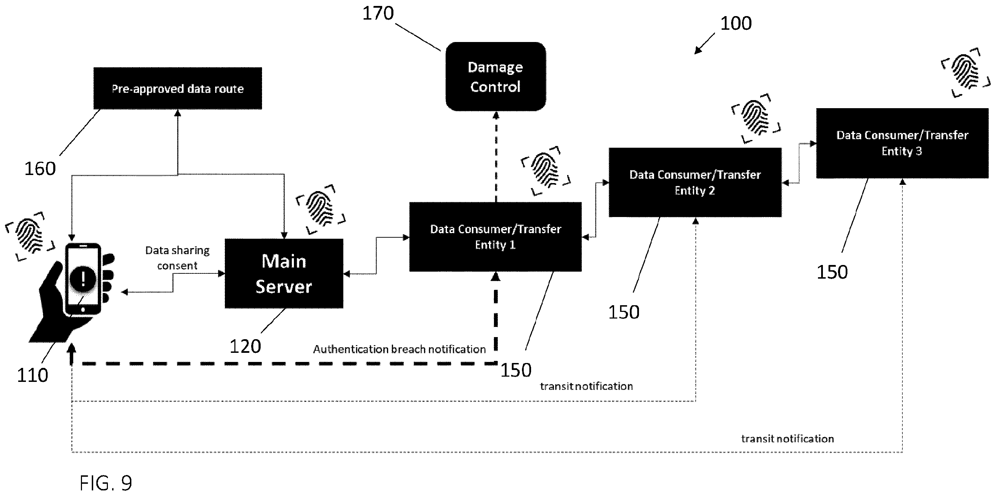

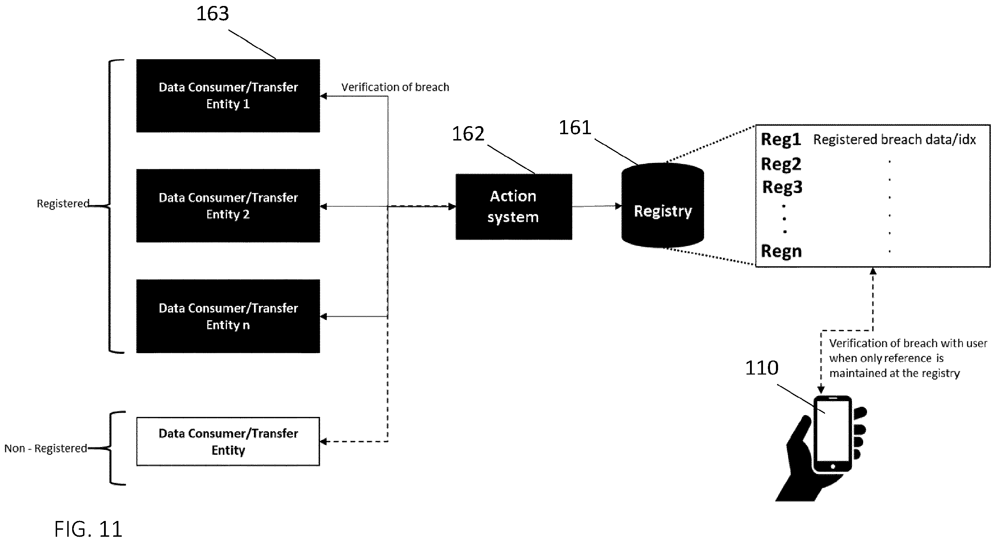

Figures 9 to 11 show an exemplified processes for dealing with an authentication breach according to embodiments of the present invention.

### Detailed description

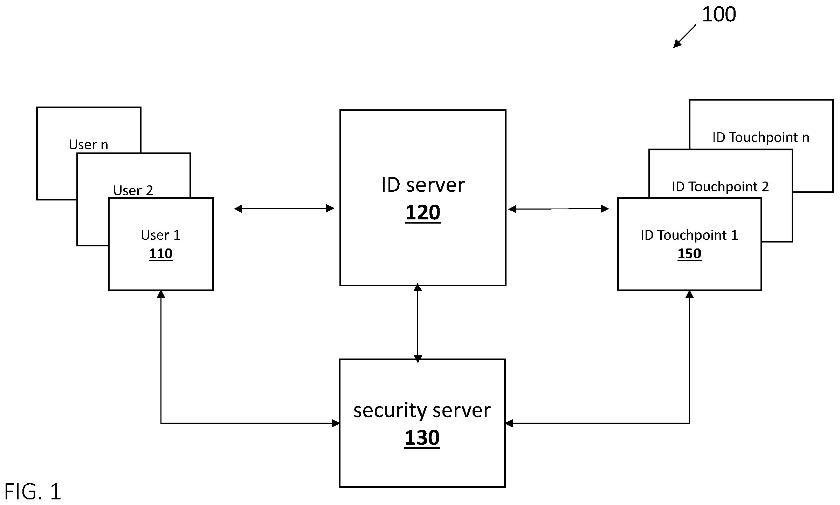

The present invention will be illustrated using the exemplified embodiments shown in figures 1 to 11, which will be described in more detail below. It should be noted that any references made to dimensions are only indicative and do not restrict the invention in any way. While this invention has been shown and described with reference to certain illustrated embodiments thereof, it will be understood by those skilled in the art that various changes in form and details may be made therein without departing from the scope of the invention encompassed by the appended claims. Furthermore, while the invention has been described with references to a particular system and method for monitoring and managing biometric identities (IDs) of registered users, it should be understood by those skilled in the art that the present system and method may be used for the monitoring and managing of any type of identity (ID) data without departing from the scope of the invention encompassed by the appended claims.

Figure 1 shows an example of an identify (ID) management system 100 according to embodiments of the present invention. The ID management system 100 is provided with an ID server 120 that is communicatively coupled via a communication network to one or more ID processing touchpoints 150 and to one or more client applications 110 running corresponding electronic devices of registered users. The ID management system 100 is configured to manage the user identities (IDs) of a plurality of registered users. The user IDs may comprise a range of information for authenticating the user, which may include but not limited to biometric characteristics, name, address, password, and the like. A security server 130 may be provided for dealing with authentication breaches occurring at the ID processing touchpoints 150, e.g., due to spoofing. According to embodiments of the present invention, the ID processing touchpoints 150 are configured to issue notifications regarding the processing and/or use of user IDs. The ID server 120 may be configured to receive and process the notifications and accordingly distribute them to the corresponding client applications 110, whereby they are notified to the user via user alerts displayed on a Graphical User Interface (GUI) running on the electronic device of the user. The ID processing touchpoints 150 are configured to authenticate a user at least based on the information contained in the corresponding user ID during an authentication procedure. Each ID processing touchpoints 150 may be part of a corresponding vendor application, which may be accessed by the user for the provision of goods and services. For example, the vendor application may be a travel booking application, which the users may use to access their corresponding travel booking. Furthermore, the ID processing touchpoints 150 may be physical touchpoints provided at different locations to authenticate users. For example, the ID processing touchpoints may be provided at airports to check-in passengers, or at hotels to check-in travellers. The Id processing touchpoints may be provided with scanning equipment for obtaining a biometric scan of the user, which is compared with the biometric scan provided in the user ID.

According to embodiments of the present invention, the user ID may contain biometric characteristics of the user. In the context of the present invention, biometric characteristics may refer to physical or behavioural human characteristics, which can be used to digitally identify a person to grant access to systems, devices or data. The biometric characteristics may be categorised into hard and soft biometric characteristics. As such, biometric characteristics may include, but not limited to, age, gender, ethnicity, height, facial measurements and geometry, scars or marks, physical characteristics such as the face, iris, fingerprint, hand geometry, vein, behavioural such as signature, keystroke, voice, gait, and the like, or biological such as DNA, bio-signals, e.g. bioelectrical signals such as the electrocardiogram (ECG) and the electroencephalogram (EEG), MRI images of X-Ray images. The biometric characteristics may be used in combination to ensure greater accuracy of identification.

In the context of the present invention, a biometric scan may refer to any means for detecting and extracting biometric characteristics of a user. For example, a biometric scan may be performed on images, recordings, data, e.g. DNA data, electrical signals, e.g. EEG, spectral data obtained from a spectral sensor, and the like.

In the context of the present invention, scanning equipment may be any device that is capable of obtaining a scan of a user. Such devices may include, but not limited, to cameras, voice recorders, fingerprint readers, iris scanners, vein scanners, gait assessment devices, sensors, spectral imaging devices, wearable sensors, handwriting detection devices, typing detection devices for keystroke recognition, and the like.

In the context of the present invention, a biometric authentication procedure indicates the security procedures and checks that may be applied at an ID processing touchpoint 150 to authenticate, verify, and identify users. The type of procedures and/or checks performed at an ID processing touchpoint 150 may vary depending on the biometric matching accuracy between the registered ID and the captured biometric scan of the user. Each ID processing touchpoint 150 may require a target biometric matching accuracy to authenticate the identity of a user successfully. As such, the ID processing touchpoints 150, may initiate additional authentication procedures and security checks to authenticate a user, in the case where the matching accuracy is below the target biometric matching value. For example, a biometric ID with high matching accuracy, e.g. the biometric accuracy is within a preferred range, may authenticate a user via an automatic biometric authentication procedure, e.g. automated border control electronic gate. On the contrary, if the biometric matching accuracy is below a predetermined target value, then additional security checks and procedures may be initiated at the biometric authentication checkpoint, such as agent verification requiring other forms of identity to identify the user.

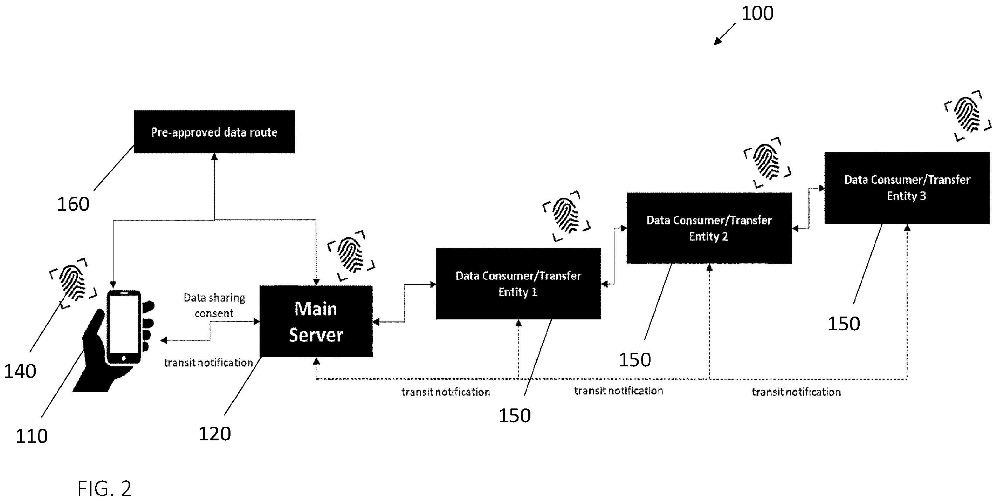

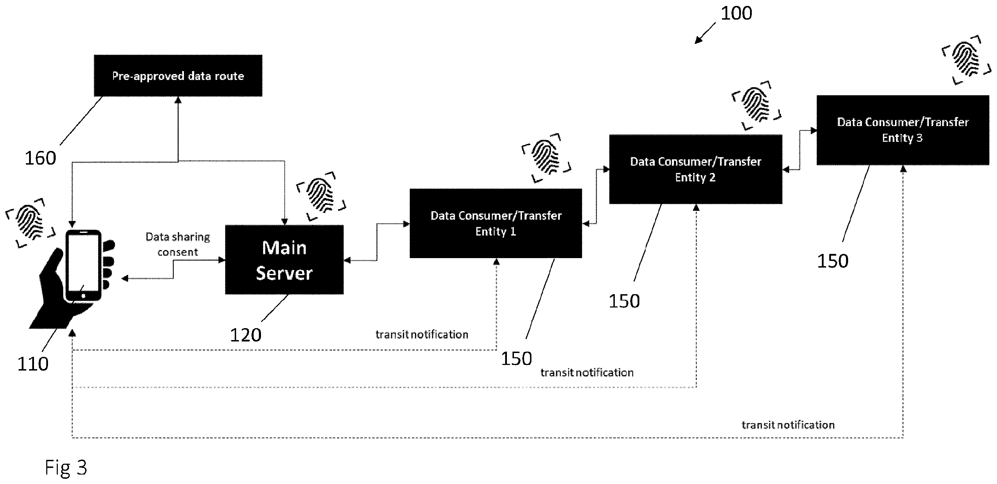

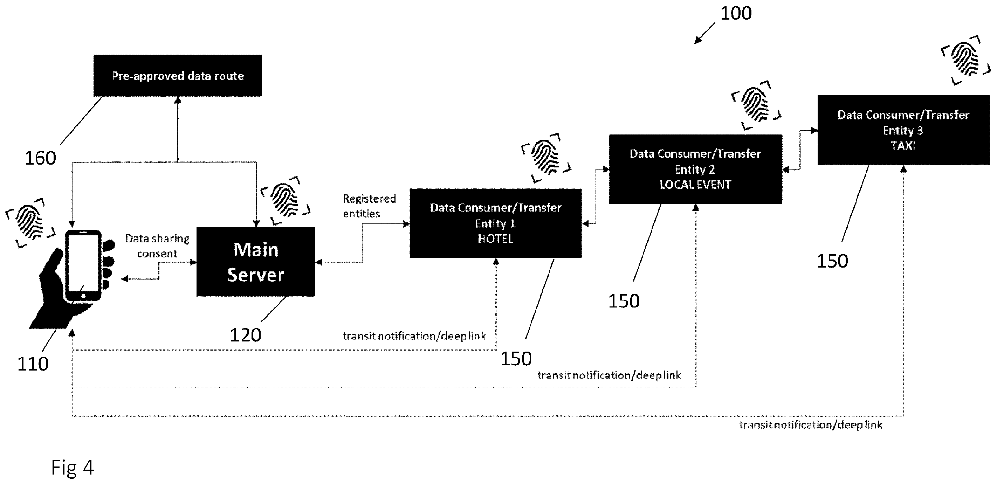

Figure 2 shows an example of how information is communicated between the client application 110, the ID server 120, and the ID processing touchpoints 150. As shown, the main server 120 is configured to manage the distribution of the user ID 140 between different entities 150. Each entity 150 is configured to process and use the user ID 140 for authenticating a user. The main server 120 may request the consent of the user to store the corresponding user ID 140, which is stored in the user device. The request is received as a notification by the client application 110 running on the electronic device of the user. The client application 110 may notify the user by means of a user alert, which may be displayed on the GUI running on the electronic device. The client application 110 may further provide the user with a number of selectable options associated with the consent request, e.g. accept, reject, ignore, and the like. In response to receiving via the GUI, a confirmation by the user that the user ID 140 may be shared, the client application issues the consent notification, which may include the user ID 140. The main server 120, receives and stores the user ID 140, and distributes it to the requesting entity 150. The main server 120 may distribute the user ID 140 to ID processing touchpoints 150 that may be part of a pre-approved route. The pre-approved route may be generated based on information provided by the user, e.g. a travel itinerary, or information obtained from other sources, e.g. connected applications. Furthermore, the main server 120 may be configured to share the user ID 140 to individual entities 150. In turn, each entity may share the user ID 140 with other entities 150 that may be in the same network. Each may be configured to issue notifications associated with the user ID 140. For example, an entity 150 may issue transit/status notifications each time a user ID 140 is received, processed, or used by the corresponding entity 150. The transit/status notifications may be communicated to the main server, where they are processed and communicated to the corresponding client application 110. The client application 110, upon receiving the transit/status notifications may be configured to issue user alerts, which are displayed on the GUI of the user. The client application 110 may further be configured to receive transit/status notifications directly from the different entities, as shown in figure 3. Figure 4 shows an example of how the user ID 140 may be distributed to different service providers according to embodiments of the present invention. As shown, the main server 120 may distribute the user ID 140, at the consent of the user, to a first entity 150, e.g. a hotel. The first entity 150 may, in turn, transfer the user ID 140, for the provision of a connected service, to a second entity, e.g. a local event, which may, in turn, transfer the user ID 140 to a third entity, e.g. a taxi. Each entity 150, as previously explained with reference to figure 2 and 3, issues a transit/status notification, which may be transferred to the main server 120 or directly to the client application 110. As such, the user stays informed at how his/her user ID 140 is processed, used, and transferred at different locations.

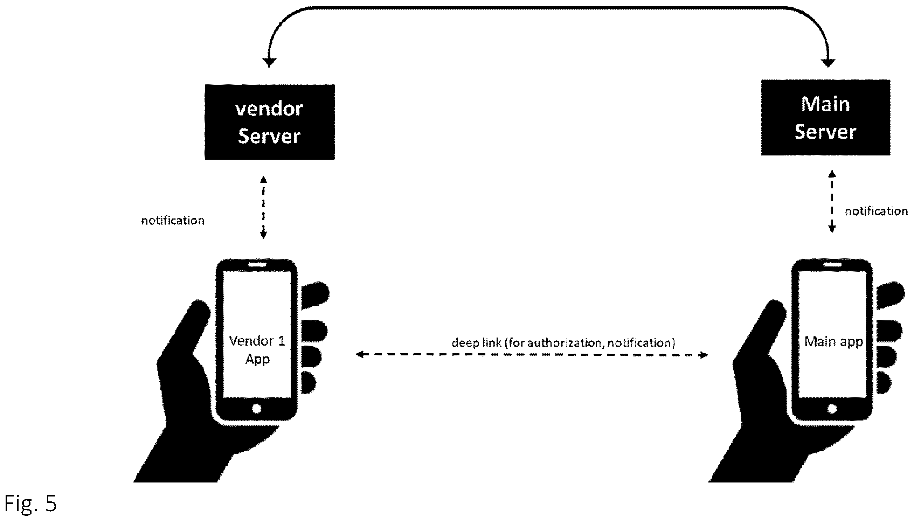

As shown in figure 5, the communication between the main server 120, the client application 110 and the vendor applications 150 may be achieved with the use of deep links. As such, sensitive information may be securely communicated to the corresponding device.

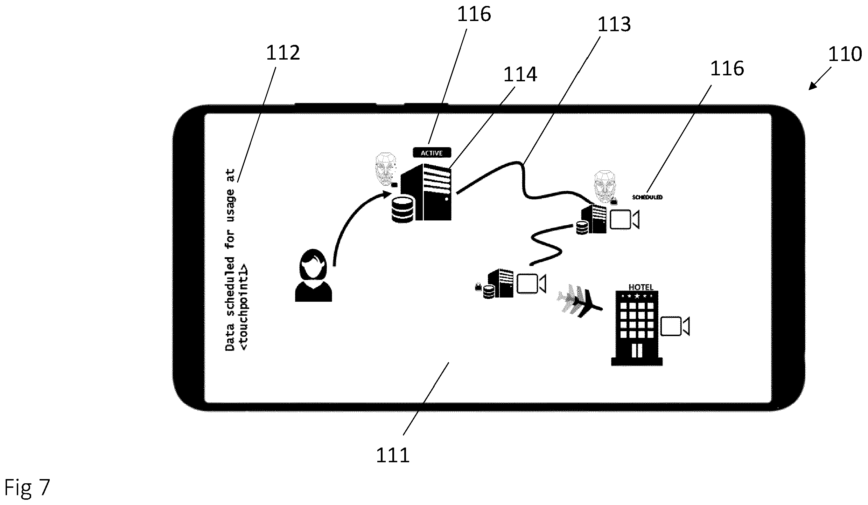

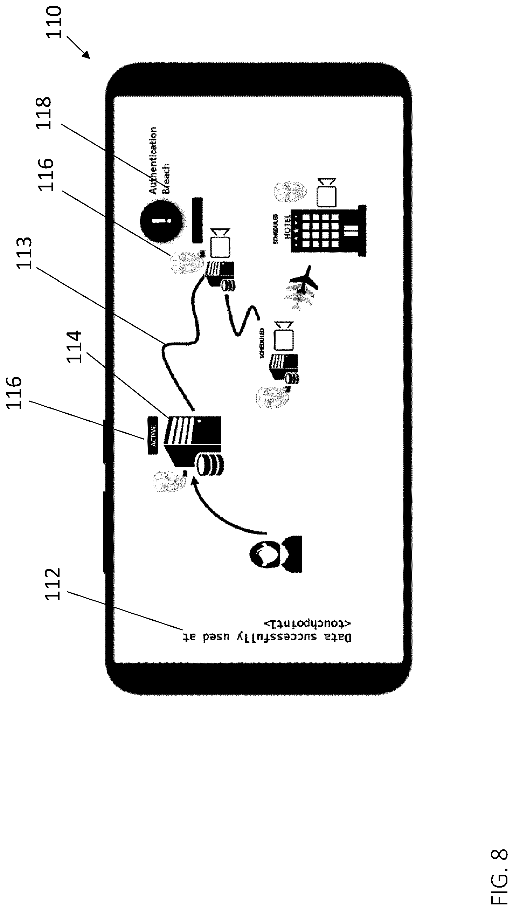

Referring now to figures 6 to 8, the client application 110, as previously discussed, may display user alerts to a GUI 111 running on the electronic device. The GUI may be part of the client application 110. The client application 110 may be configured to graphically represent on the GUI the route 113 taken by the user ID 140 as it is received, processed and used at different locations 114. The different locations may be represented by predetermined icons, as shown in figure 6. The user alerts 112 may be displayed on the GUI, along with a set of options (not shown), which the user may select from to initiate an action in response to the notification. As shown in figure 7, the status 116 of the user ID 140 at each location may be shown at each location 114. As such, users may monitor in a quick and easy manner the status of the corresponding user ID 140. Furthermore, the user may take action associated with the status notifications received 112 and 114. For example, as shown in figure 8, the user upon identifying an unauthorised use of their user ID 140 may issue a breach notification 118, which is communicated at the corresponding ID processing touchpoint 120 and/or the main server 120. As such, the user may promptly intervene in case of improper use of their user ID 140.

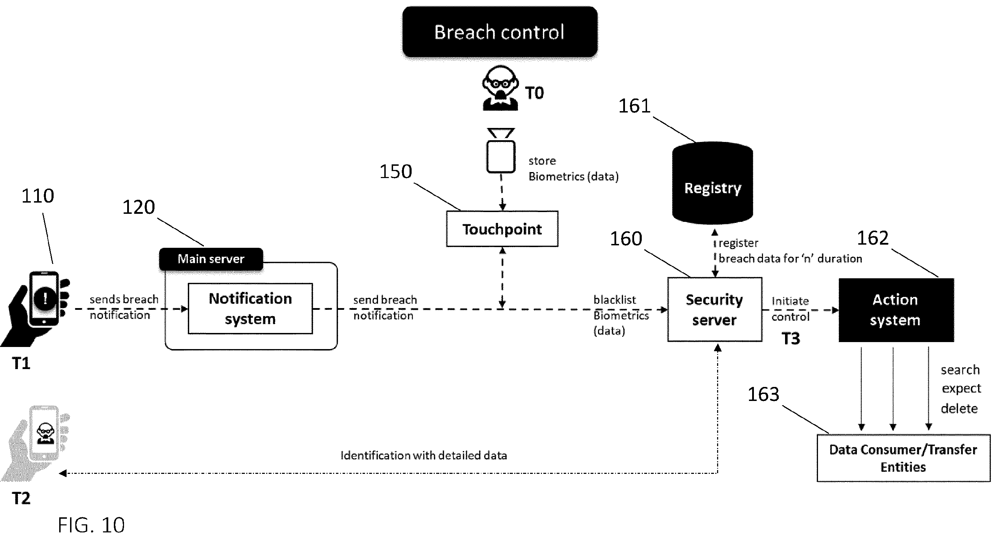

Referring now to figure 9 to 11, the breach notification may be transmitted to the ID processing touchpoint 150 and/or the main server 120, as shown in figure 9. As soon as the breach notification is received at the ID processing touchpoint 150, e.g. entity 1, a damage control procedure 170 may be initiated. Figure 10 shows an example of the actions taken during an authentication breach, which may be as follows:
- T0 defines the time at breach has occurred but not detected, as it has been due to spoofing which the ID processing touchpoint 150 failed to detect
- T1 defines the time at which the user identifies the breach of identity or personal data and notifies the system of the possible breach. The breach notification is transferred to the main server 120, or directly to the ID processing touchpoint 150. The main server 120 communicates the breach notification to the security server 160. The security server 160 collects the necessary information pertaining to the breach and prepares a report.
- T2 defines the time at which the detailed report is sent to the user to investigate and identify the details/purpose of the breach. At the same time, a registry of the breach data is maintained for 'n' days or till the breach is identified. The registry maintains the list of breached data or reference of the transaction, e.g. in the case of the pre-approved route. When a reference of the breach data is maintained in the registry, the real data is fetched from the user device, for taking the breach control action, as per the need. This reference could be a transaction id and/or a timestamp of the user transaction.
- T3 defines the time at which the action for breach control is taken through an action system 162. The deletion of known and authorised traces of the identity/data may be initiated. The action system 162, depending on the type the connected entity may:
   ∘ Search through the data obtained from the registered entity, if permitted, to identity the breach causer through a global/local surveillance system, For example, the action system 162 may search through video footage to identify the person that initiated the transaction that led to the breached authentication;
   ∘ Anticipate that the user ID 140 may be breached in other ID processing touchpoints 150. As such the provision of the registry may help in that other ID processing touchpoints 150 may search through the registry to identify if the user Id being processed has been breached.
   o Delete the breached user ID 140 from the ID management system 100 to control the damage

As previously discussed, the action system 162 may communicate with the corresponding ID processing touchpoints 150, e.g. entities 1 to n, to verify the breach and further obtain further information that would allow the identification of the person responsible for the breach. The information obtained is stored in the registry 161 in the form of references to transactions, which may be passed on to the client application 110. The information obtained from the different ID processing touchpoints 150 may be dependent on their type and the permission available for sharing data.

In general, the system presented herein enables a user to monitor and manage their user ID 140 as it is transferred, processed and used at different devices, systems, and applications. As such, the user may withdraw permission of the use of their user ID 140 and further be in a position to take action when a breach of their user data is identified.

In general, the routines executed to implement the embodiments of the invention, whether implemented as part of an operating system or a specific application, component, program, object, module or sequence of instructions, or even a subset thereof, may be referred to herein as "computer program code," or simply "program code." Program code typically comprises computer-readable instructions that are resident at various times in various memory and storage devices in the computer and that, when read and executed by one or more processors in a computer, cause that computer to perform the operations necessary to execute operations and/or elements embodying the various aspects of the embodiments of the invention. The computer-readable program instructions for carrying out operations of the embodiments of the invention may be, for example, assembly language or either source code or object code is written in any combination of one or more programming languages.

The program code embodied in any of the applications/modules described herein is capable of being individually or collectively distributed as a program product in a variety of different forms. In particular, the program code may be distributed using the computer-readable storage medium having the computer-readable program instructions thereon for causing a processor to carry out aspects of the embodiments of the invention. Computer-readable storage media, which is inherently non-transitory, may include volatile and non-volatile, and removable and non-removable tangible media implemented in any method or technology for storage of information, such as computer-readable instructions, data structures, program modules, or other data. Computer-readable storage media may further include RAM, ROM, erasable programmable read-only memory (EPROM), electrically erasable programmable read-only memory (EEPROM), flash memory or other robust state memory technology, portable compact disc read-only memory (CD-ROM), or other optical storage, magnetic cassettes, magnetic tape, magnetic disk storage or other magnetic storage devices, or any other medium that can be used to store the desired information and which can be read by a computer. A computer-readable storage medium should not be construed as transitory signals per se (e.g., radio waves or other propagating electromagnetic waves, electromagnetic waves propagating through a transmission media such as a waveguide, or electrical signals transmitted through a wire). Computer-readable program instructions may be downloaded to a computer, another type of programmable data processing apparatus, or another device from a computer-readable storage medium or an external computer or external storage device via a network. Computer-readable program instructions stored in a computer-readable medium may be used to direct a computer, other types of programmable data processing apparatus, or other devices to function in a particular manner, such that the instructions stored in the computer-readable medium produce an article of manufacture including instructions that implement the functions/acts specified in the flowcharts, sequence diagrams, and/or block diagrams. The computer program instructions may be provided to one or more processors of a general-purpose computer, special purpose computer, or other programmable data processing apparatus to produce a machine, such that the instructions, which execute via the one or more processors, cause a series of computations to be performed to implement the functions and/or acts specified in the flowcharts, sequence diagrams, and/or block diagrams.

In certain alternative embodiments, the functions and/or acts specified in the flowcharts, sequence diagrams, and/or block diagrams may be re-ordered, processed serially, and/or processed concurrently without departing from the scope of the invention. Moreover, any of the flowcharts, sequence diagrams, and/or block diagrams may include more or fewer blocks than those illustrated consistent with embodiments of the invention.

The terminology used herein is for the purpose of describing particular embodiments only and is not intended to be limiting of the embodiments of the invention. As used herein, the singular forms "a", "an" and "the" are intended to include the plural forms as well, unless the context indicates otherwise. It will be further understood that the terms "comprise" and/or "comprising," when used in this specification, specify the presence of stated features, integers, steps, operations, elements, and/or components, but do not preclude the presence or addition of one or more other features, integers, steps, operations, elements, components, and/or groups thereof. Furthermore, to the extent that the terms "includes", "having", "has", "with", "comprised of", or variants thereof are used in either the detailed description or the claims, such terms are intended to be inclusive in a manner similar to the term "comprising".

While a description of various embodiments has illustrated all of the inventions and while these embodiments have been described in considerable detail, it is not the intention of the Applicants to restrict or in any way limit the scope of the appended claims to such detail. Additional advantages and modifications will readily appear to those skilled in the art. The invention in its broader aspects is therefore not limited to the specific details, representative apparatus and method, and illustrative examples shown and described. Accordingly, departures may be made from such details without departing from the scope of the Applicants general inventive concept.

## Claims

1. A distributed system (100) for managing identity, ID, data (140) of a registered user, wherein the ID data (140) comprises biometric characteristics of the registered user, the ID management system (100) comprising:
a client application (110) running on an electronic device associated with the registered user, the client application (110) comprising a graphic user interface, GUI, (111) for interacting with the corresponding registered user;
a network of ID processing touchpoints (150), wherein an ID processing touchpoint (150) is configured to process ID data (140) for the authentication of users, wherein the ID processing touchpoint (150) is configured to issue a status notification associated with the processing and/or use of the ID data (140) by the ID processing touchpoint (150); and
an ID server (120) configured to receive and distribute the status notification issued by the ID processing touchpoint (150) to the corresponding client application (110);
wherein the client application (110) is configured, in response to receiving the status notification from the ID server (120), to issue user alerts on the GUI (111) to notify the registered user on the status of the corresponding ID data (140) at the ID processing touchpoint (150); and
wherein the client application (110) is configured to display on the GUI (111) a set of user-selectable options for initiating one or more actions in response to the status notification received from the ID server (120).

2. The distributed system (100) of claim 1, wherein the client application (110) is configured, upon receiving a user response through the GUI (111), to issue counter-notification to the ID server (120) and/or an ID processing touchpoint (150).

3. The distributed system (100) according to claim 1 or 2, wherein the selectable options further comprise providing consent for the sharing of the corresponding ID data (140) to ID processing touchpoints (150) and issuing a breach notification indicating an unauthorised ID transaction at an ID processing touchpoint.

4. The distributed system (100) according to claim 3, wherein the client application (110) is configured, in response to the user selecting to provide consent for the sharing of the corresponding ID data (140), to communicate a consent notification comprising the requested ID data (140) of the user to the ID server (120), the ID server (120) being configured to distribute the ID data (140) at a selected set of ID processing touchpoints (150).

5. The distributed system (100) according to claim 3, wherein upon receiving a selection for issuing a breach notification, the client application is configured to issue a corresponding breach notification, which is communicated to a security server, where it is stored in a registry, the security server being part of the ID management system.

6. The distributed system (100) according to claim 5, wherein the security server (130) is further configured upon receiving the breach notification to collect information from the one or more ID processing touchpoints (150) associated with the unauthorised transaction and accordingly communicate a report to the client application (110) of the registered user, the report comprising information associated with the breach.

7. An distributed system (100) according to any one of claims 5 or 6, wherein the security server (130), upon receiving the breach notification is configured to initiate a set of breach control actions for assessing and managing the identified ID breach, the breach control actions comprising at least one of investigating the cause of the breach, notifying other ID processing touchpoints 150 of the breach, and deleting the breached data from the ID management system (100) and/or other ID processing touchpoints (150).

8. The distributed system (100) according to any one of the preceding claims, wherein the client application (110) is configured to display on the GUI (111) a graphical representation of the status of the corresponding ID data (140) at different ID processing touchpoints (150).

9. The distributed system (100) according to claim 8, wherein the graphic representation is in the form of a route displaying the transfer of the ID data (140) between different ID processing touchpoints (150).

10. The distributed system (100) according to claim 9, wherein, based on the status notification, the client application (110) is configured to display on the route the current status of the ID data (140) at the different ID processing touchpoints (150).

11. The distributed system (100) according to any one of claims 9 or 10, wherein the route is generated based on information obtained from a travel itinerary of the registered user.

12. The distributed system (100) according to any one of the preceding claims, wherein the ID processing touchpoints (150) are connected to the ID server (120) on the basis of membership.

13. The distributed system (100) according to claim 12, wherein the ID server (120) is configured to include or exclude ID processing touchpoints (150) from membership based on metrics indicative their ID security performance.

14. A method for managing identity, ID, data (140) of a registered user, wherein the ID data (140) comprises biometric characteristics of the registered user, the method comprising:
receiving, at an ID server (120), a status notification issued by an ID processing touchpoint (150) of a network of ID processing touchpoints (150) associated with the processing and/or use of ID data (140) of the registered user;
distributing, from the ID server (120), the status notification to a corresponding client application (110), wherein the client application (110) is running on an electronic device associated with the registered user and comprising a graphic user interface, GUI, (111) for interacting with the corresponding registered user;
notifying, by the client application (110), the registered user on the status of the corresponding ID data (140) by issuing user alerts on the GUI (111) in response to receiving the status notification from the ID server (120); and
displaying on the GUI (111) a set of user-selectable options for initiating one or more actions in response to the status notification received from the ID server (120).

## Patentansprüche

1. Verteiltes System (100) zum Verwalten von Identitäts-, ID, Daten (140) eines registrierten Benutzers, wobei die ID-Daten (140) biometrische Merkmale des registrierten Benutzers umfassen, wobei das ID-Verwaltungssystem (100) umfasst:
eine Clientanwendung (110), die auf einer elektronischen Vorrichtung ausgeführt wird, die dem registrierten Benutzer zugeordnet ist, wobei die Clientanwendung (110) eine grafische Benutzerschnittstelle, GUI, (111) zur Interaktion mit dem zugeordneten registrierten Benutzer umfasst;
ein Netzwerk von ID-verarbeitenden Kontaktpunkten (150), wobei ein ID-verarbeitender Kontaktpunkt (150) dafür eingerichtet ist, ID-Daten (140) für die Authentifizierung von Benutzern zu verarbeiten, wobei der ID-verarbeitende Kontaktpunkt (150) dafür eingerichtet ist, eine Statusbenachrichtigung auszugeben, die der Verarbeitung und/oder der Verwendung der ID-Daten (140) durch den ID-verarbeitenden Kontaktpunkt (150) zugeordnet ist; und
einen ID-Server (120), der dafür eingerichtet ist, die vom ID-verarbeitenden Kontaktpunkt (150) ausgegebene Statusbenachrichtigung zu empfangen und an die zugehörige Clientanwendung (110) weiterzuleiten;
wobei die Clientanwendung (110) dafür eingerichtet ist, in Reaktion auf das Empfangen der Statusbenachrichtigung vom ID-Server (120), auf der GUI (111) Benutzerwarnmeldungen auszugeben, den registrierten Benutzer über den Status der zugehörigen ID-Daten (140) am ID-verarbeitenden Kontaktpunkt (150) zu unterrichten; und
wobei die Clientanwendung (110) dafür eingerichtet ist, auf der GUI (111) einen Satz vom Benutzer auswählbarer Optionen zum Einleiten einer oder mehrerer Aktionen in Reaktion auf die vom ID-Server (120) empfangene Statusbenachrichtigung anzuzeigen.

2. Das verteilte System (100) nach Anspruch 1, wobei die Clientanwendung (110) dafür eingerichtet ist, nach dem Empfang einer Benutzerantwort über die GUI (111) eine Gegenbenachrichtigung an den ID-Server (120) und/oder einen ID-verarbeitenden Kontaktpunkt (150) auszugeben.

3. Das verteilte System (100) nach Anspruch 1 oder 2, wobei die auswählbaren Optionen ferner das Bereitstellen der Zustimmung zur Weitergabe der entsprechenden ID-Daten (140) an ID-verarbeitenden Kontaktpunkte (150) und das Ausgeben einer Verletzungsmeldung, die eine nicht autorisierte ID-Transaktion an einem ID-verarbeitenden Kontaktpunkt anzeigt, umfassen.

4. Das verteilte System (100) nach Anspruch 3, wobei die Clientanwendung (110) dafür eingerichtet ist, als Reaktion auf die Auswahl des Benutzers, seine Zustimmung zur Weitergabe der entsprechenden ID-Daten (140) zu erteilen, eine Zustimmungsmeldung, die die angeforderten ID-Daten (140) des Benutzers enthält, an den ID-Server (120) zu übermitteln, wobei der ID-Server (120) dafür eingerichtet ist, die ID-Daten (140) an einen ausgewählten Satz von ID-verarbeitenden Kontaktpunkten (150) zu verteilen.

5. Das verteilte System (100) nach Anspruch 3, wobei die Clientanwendung dafür eingerichtet ist, bei Empfang einer Auswahl zur Ausgabe einer Verletzungsmeldung eine entsprechende Verletzungsmeldung auszugeben, die an einen Sicherheitsserver übermittelt wird, wo sie in einem Register gespeichert wird, wobei der Sicherheitsserver Teil des ID-Verwaltungssystems ist.

6. Das verteilte System (100) nach Anspruch 5, wobei der Sicherheitsserver (130) ferner dafür eingerichtet ist, nach Erhalt der Benachrichtigung über die Verletzung Informationen von dem einen oder den mehreren ID-verarbeitenden Kontaktpunkten (150) zu sammeln, die mit der nicht autorisierten Transaktion verbunden sind, und dementsprechend einen Bericht an die Clientanwendung (110) des registrierten Benutzers zu übermitteln, wobei der Bericht Informationen umfasst, die mit der Verletzung verbunden sind.

7. Das verteilte System (100) nach einem der Ansprüche 5 oder 6, wobei der Sicherheitsserver (130) nach Erhalt der Benachrichtigung über die Verletzung dafür eingerichtet ist, eine Reihe von Verletzungssteuerungsmaßnahmen zur Bewertung und Verwaltung der identifizierten ID-Verletzung einzuleiten, wobei die Verletzungssteuerungsmaßnahmen mindestens eine der folgenden Maßnahmen umfassen: Untersuchung der Ursache der Verletzung, Benachrichtigung anderer ID-verarbeitender Kontaktpunkte (150) über die Verletzung und Löschung der verletzten Daten aus dem ID-Verwaltungssystem (100) und/oder anderen ID-verarbeitenden Kontaktpunkten (150).

8. Das verteilte System (100) nach einem der vorhergehenden Ansprüche, wobei die Clientanwendung (110) dafür eingerichtet ist, auf der GUI (111) eine grafische Darstellung des Status der entsprechenden ID-Daten (140) an verschiedenen ID-verarbeitenden Kontaktpunkten (150) anzuzeigen.

9. Das verteilte System (100) nach Anspruch 8, wobei die grafische Darstellung in Form eines Pfades erfolgt, der die Übertragung der ID-Daten (140) zwischen verschiedenen ID-verarbeitenden Kontaktpunkte (150) anzeigt.

10. Das verteilte System (100) nach Anspruch 9, wobei die Clientanwendung (110) dafür eingerichtet ist, auf der Grundlage der Statusbenachrichtigung den aktuellen Status der ID-Daten (140) an den verschiedenen ID-verarbeitenden Kontaktpunkten (150) auf dem Pfad anzuzeigen.

11. Das verteilte System (100) nach einem der Ansprüche 9 oder 10, wobei der Pfad auf der Grundlage von Informationen aus einem Reiseplan des registrierten Benutzers erzeugt wird.

12. Das verteilte System (100) nach einem der vorhergehenden Ansprüche, wobei die ID-verarbeitenden Kontaktpunkte (150) mit dem ID-Server (120) auf der Basis einer Mitgliedschaft verbunden sind.

13. Das verteilte System (100) nach Anspruch 12, wobei der ID-Server (120) dafür eingerichtet ist, ID-verarbeitende Kontaktpunkte (150) auf der Grundlage von Metriken, die ihre ID-Sicherheitsleistung anzeigen, in die Mitgliedschaft einzuschließen oder von ihr auszuschließen.

14. Verfahren zum Verwalten von Identitäts-, ID, Daten (140) eines registrierten Benutzers, wobei die ID-Daten (140) biometrische Merkmale des registrierten Benutzers umfassen, wobei das Verfahren umfasst:
Empfangen, an einem ID-Server (120), einer Statusbenachrichtigung, die von einem ID-verarbeitenden Kontaktpunkt (150) eines Netzwerks von ID-verarbeitenden Kontaktpunkten (150) ausgegeben wird, und die mit der Verarbeitung und/oder Verwendung von ID-Daten (140) des registrierten Benutzers verbunden ist;
Weiterleiten, vom ID-Server (120), der Statusbenachrichtigung an eine entsprechende Clientanwendung (110), die auf einer elektronischen Vorrichtung ausgeführt wird, die dem registrierten Benutzer zugeordnet ist und eine grafische Benutzeroberfläche, GUI, (111) zur Interaktion mit dem zugeordneten registrierten Benutzer umfasst;
Benachrichtigen, durch die Clientanwendung (110), des registrierten Benutzers über den Status der entsprechenden ID-Daten (140) durch Ausgeben von Benutzerwarnmeldungen auf der GUI (111) als Reaktion auf das Empfangen der Statusbenachrichtigung von dem ID-Server (120); und
Anzeigen, auf der GUI (111), eines Satzes vom Benutzer auswählbarer Optionen zum Einleiten einer oder mehrerer Aktionen als Reaktion auf die vom ID-Server (120) empfangene Statusbenachrichtigung.

## Revendications

1. Système distribué (100) de gestion de données d'identité, ID, (140) d'un utilisateur enregistré, dans lequel les données d'ID (140) comprennent des caractéristiques biométriques de l'utilisateur enregistré, le système de gestion d'ID (100) comprenant :
une application client (110) s'exécutant sur un dispositif électronique associé à l'utilisateur enregistré, l'application client (110) comprenant une interface utilisateur graphique, GUI, (111) pour interagir avec l'utilisateur enregistré correspondant ;
un réseau de points de contact de traitement d'ID (150), dans lequel un point de contact de traitement d'ID (150) est configuré pour traiter des données d'ID (140) pour l'authentification d'utilisateurs, dans lequel le point de contact de traitement d'ID (150) est configuré pour émettre une notification de statut associée au traitement et/ou à l'utilisation des données d'ID (140) par le point de contact de traitement d'ID (150) ; et
un serveur d'ID (120) configuré pour recevoir et distribuer la notification de statut émise par le point de contact de traitement d'ID (150) à l'application client (110) correspondante ;
dans lequel l'application client (110) est configurée, en réponse à la réception de la notification de statut depuis le serveur d'ID (120), pour émettre des alertes d'utilisateur sur la GUI (111) pour notifier, à l'utilisateur enregistré, le statut des données d'ID (140) correspondantes au niveau du point de contact de traitement d'ID (150) ; et
dans lequel l'application client (110) est configurée pour afficher sur la GUI (111) un ensemble d'options sélectionnables par l'utilisateur pour initier une ou plusieurs actions en réponse à la notification de statut reçue depuis le serveur d'ID (120).

2. Système distribué (100) selon la revendication 1, dans lequel l'application client (110) est configurée, à la réception d'une réponse d'utilisateur par l'intermédiaire de la GUI (111), pour émettre une contre-notification au serveur d'ID (120) et/ou au point de contact de traitement d'ID (150).

3. Système distribué (100) selon la revendication 1 ou 2, dans lequel les options sélectionnables comprennent en outre le fait de donner un consentement pour le partage des données d'ID (140) correspondante à des points de contact de traitement d'ID (150) et émettre une notification de violation indiquant une transaction d'ID non autorisée au niveau d'un point de contact de traitement d'ID.

4. Système distribué (100) selon la revendication 3, dans lequel l'application client (110) est configurée, en réponse à la sélection par l'utilisateur de donner son consentement pour le partage des données d'ID (140) correspondantes, pour communiquer une notification de consentement comprenant les données d'ID (140) demandées de l'utilisateur au serveur d'ID (120), le serveur d'ID (120) étant configuré pour distribuer les données d'ID (140) à un ensemble sélectionné de points de contact de traitement d'ID (150).

5. Système distribué (100) selon la revendication 3, dans lequel, à la réception d'une sélection pour émettre une notification de violation, l'application client est configurée pour émettre une notification de violation correspondante, qui est communiquée à un serveur de sécurité, où elle est stockée dans un registre, le serveur de sécurité faisant partie du système de gestion d'ID.

6. Système distribué (100) selon la revendication 5, dans lequel le serveur de sécurité (130) est en outre configuré, à la réception de la notification de violation, pour collecter des informations depuis les un ou plusieurs points de contact de traitement d'ID (150) associés à la transaction non autorisée et en conséquence communiquer un rapport à l'application client (110) de l'utilisateur enregistré, le rapport comprenant des informations associées à la violation.

7. Système distribué (100) selon la revendication 5 ou 6, dans lequel le serveur de sécurité (130), à la réception de la notification de violation, est configuré pour initier un ensemble d'actions de contrôle de violation pour évaluer et gérer la violation d'ID identifiée, les actions de contrôle de violation comprenant au moins l'une parmi l'investigation de la cause de la violation, la notification de la violation à d'autres points de contact de traitement d'ID (150), et la suppression des données violées du système de gestion d'ID (100) et/ou d'autres points de contact de traitement d'ID (150).

8. Système distribué (100) selon l'une quelconque des revendications précédentes, dans lequel l'application client (110) est configurée pour afficher, sur la GUI (111), une représentation graphique du statut des données d'ID (140) correspondantes au niveau de différents points de contact de traitement d'ID (150).

9. Système distribué (100) selon la revendication 8, dans lequel la représentation graphique est sous la forme d'un trajet affichant le transfert des données d'ID (140) entre différents points de contact de traitement d'ID (150).

10. Système distribué (100) selon la revendication 9, dans lequel, sur la base de la notification de statut, l'application client (110) est configurée pour afficher, sur le trajet, le statut courant des données d'ID (140) au niveau des différents points de contact de traitement d'ID (150).

11. Système distribué (100) selon la revendication 9 ou 10, dans lequel le trajet est généré sur la base d'informations obtenues à partir d'un itinéraire de déplacement de l'utilisateur enregistré.

12. Système distribué (100) selon l'une quelconque des revendications précédentes, dans lequel les points de contact de traitement d'ID (150) sont reliés au serveur d'ID (120) sur la base d'une adhésion.

13. Système distribué (100) selon la revendication 12, dans lequel le serveur d'ID (120) est configuré pour inclure ou exclure des points de contact de traitement d'ID (150) de l'adhésion sur la base de métriques indicatives de leurs performances de sécurité d'ID.

14. Méthode de gestion de données d'identité, ID, (140) d'un utilisateur enregistré, dans laquelle les données d'ID (140) contiennent des caractéristiques biométriques d'un utilisateur enregistré, la méthode comprenant :
la réception, au niveau d'un serveur d'ID (120), d'une notification de statut émise par un point de contact de traitement d'ID (150) d'un réseau de points de contact de traitement d'ID (150) associé au traitement et/ou à l'utilisation de données d'ID (140) de l'utilisateur enregistré ;
la distribution, depuis le serveur d'ID (120), de la notification de statut à une application client (110) correspondante, dans laquelle l'application client (100) s'exécute sur un dispositif électronique associé à l'utilisateur enregistré et comprend une interface utilisateur graphique, GUI, (111) pour interagir avec l'utilisateur enregistré correspondant ;
la notification, par l'application client (110), du statut des données d'ID (140) correspondantes à l'utilisateur enregistré par l'émission d'alertes d'utilisateur sur la GUI (111) en réponse à la réception de la notification de statut depuis le serveur d'ID (120) ; et
l'affichage, sur la GUI (111), d'un ensemble d'options sélectionnables par l'utilisateur pour initier une ou plusieurs actions en réponse à la notification de statut reçue depuis le serveur d'ID (120).
